# EUROPÄISCHE PATENTSCHRIFT

(11) **EP 2 582 738 B1**
(45) Veröffentlichungstag und Bekanntmachung des Hinweises auf die Patenterteilung: **17.12.2014**
(21) Anmeldenummer: 11729270.6
(22) Anmeldetag: 01.06.2011
(51) Int. Cl.: C08G 18/10, C09J 175/08, C08G 65/336, C09J 171/02, C08L 71/02

(54) **SILANVERNETZENDE ZUSAMMENSETZUNGEN**
SILANE-CROSSLINKING COMPOSITIONS
COMPOSITIONS DE RÉTICULATION DE SILANES

(30) Priorität: 15.06.2010 DE 102010030096
(43) Veröffentlichungstag der Anmeldung: 24.04.2013
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); BAUER, Andreas, 84375 Kirchdorf (DE)
(74) Vertreter: Fritz, Helmut
(86) Internationale Anmeldenummer: PCT/EP2011/059096
(87) Internationale Veröffentlichungsnummer: WO 2011/157562

(56) Entgegenhaltungen:
- EP-A1- 1 867 693
- WO-A2-2007/050538
- DE-A1-102007 011 511
- US-A1- 2007 088 137

## Beschreibung

Die Erfindung betrifft einkomponentige silanvernetzende Zusammensetzungen, die als Klebstoffe mit hoher zugscherfestigkeit und hoher Härtungsgeschwindigkeit eingesetzt werden.

Zur Durchführung von Holzverklebungen sind u.a. Holzleime bekannt, die üblicherweise auf Basis von Polyvinylacetatdispersionen formuliert sind. Diese zeigen zwar eine gute Adhäsion auf Holz, ihre Abbindegeschwindigkeit, d.h. die bis zur Ausbildung einer belastbaren Verklebung verstreichende Zeit, ist jedoch sehr lang, so dass eine andauernde mechanische Fixierung der zu verklebenden Werkstücke in der Regel unverzichtbar ist. Darüber hinaus ist der Einsatz dieses Klebstofftyps problematisch, wenn die Verklebung Feuchtigkeit ausgesetzt wird, da die Holzleime üblicherweise nur eine begrenzte Beständigkeit gegenüber Wasser aufweisen.

Im Falle stark beanspruchter Holzkonstruktionen, bei denen hohe Anforderungen an die mechanische Festigkeit der Bauteile gestellt werden und die Verbundfestigkeit auch nach vielen Jahren unter Witterungseinflüssen noch ausreichend hoch sein soll, sind derartige Holzleime meist nicht geeignet.

Hier werden typischerweise isocyanatvernetzende PU-Klebstoffe eingesetzt. Diese enthalten üblicherweise aromatische Polyisocyanate. Derartige Systeme härten durch eine Reaktion der Isocyanatgruppen mit (Luft-)Feuchtigkeit aus.

Da PU-Klebstoffe über eine chemische Vernetzungsreaktion härten und sich auch chemisch an Holz als Substrat anbinden können, zeigen sie deutlich bessere mechanische Eigenschaften und sind auch wesentlich beständiger gegenüber äußeren (Witterungs-) Einflüssen wie Feuchtigkeit oder direkten Wasserkontakt.

Die generelle Leistungsfähigkeit von Klebstoffen wird durch die Erfüllung von Normen, wie beispielsweise die DIN EN 204, Beanspruchungsgruppe D1 - D4 festgestellt. Diese Normen können in der Regel von isocyanatvernetzenden Klebstoffen erfüllt werden.

Dennoch besitzen auch isocyanatvernetzende Klebstoffe z.T. massive systemimmanente Nachteile. Z.B. besitzen einkomponentige PU-Klebstoffsysteme in der Regel nur moderate Härtungsgeschwindigkeiten. Zwar kann die Isocyanatvernetzung prinzipiell durch eine aggressive Katalyse stark beschleunigt werden. Aber da eine derartige Katalyse grundsätzlich auch unerwünschte Nebenreaktionen der Isocyanatgruppen katalysieren (z.B. Bildung von Allophanaten, Uretdionen, Isocyanuraten etc.), weisen die entsprechenden Systeme dann keine hinreichende Lagerstabilität mehr auf.

Ein weiterer Nachteil der isocyanatvernetzenden Klebstoffe ist die sensibilisierende Wirkung, die sämtliche isocyanathaltigen Verbindungen aufweisen. Zudem sind viele monomere Isocyanate giftig oder sogar sehr giftig und/oder stehen im Verdacht, krebserregend zu sein. Dies ist insofern problematisch, da hier der Endanwender, d.h. der Handwerker oder Do-it-yourself-Anwender nicht nur mit dem ausgehärteten und damit isocyanätfreien und völlig unbedenklichen Produkt, sondern auch mit dem isocyanathaltigen Klebstoff in Kontakt kommt. Beim ungeübten Heimwerker besteht dabei die besondere Gefahr, dass die Produkte gegebenenfalls nicht fachkundig und/oder sachgerecht angewendet werden. Zusätzliche Gefahren gehen hier auch von einer nicht sachgerechten Lagerung, z.B. in Reichweite von Kindern, aus. Beim professionellen Handwerker hingegen ist zwar von einer sachgerechten Anwendung und Lagerung auszugehen. Hier besteht jedoch gegebenenfalls das Problem, dass der professionelle Anwender regelmäßig - gegebenenfalls sogar mehrmals täglich - mit dem isocyanathaltigen Material umgehen muss, was insbesondere ob der o.g. sensibilisierenden Wirkung von Isocyanaten potentiell kritisch ist.

Etwas günstiger sind hier isocyanatvernetzende Klebstoffe, die nur sehr geringe Gehalte an flüchtigen Isocyanaten aufweisen und somit zumindest kennzeichnungsfrei sind. Diese basieren jedoch meist auf aliphatischen Isocyanaten, welche wiederum weniger reaktiv sind. Diese Klebstoffe sind somit für Anwendungen, in denen es auf eine schnelle Abbindung des Klebstoffes ankommt, noch einmal ungünstiger als herkömmliche PU-Klebstoffe.

Weitere Nachteile von isocyanatbasierenden Klebstoffen sind zudem die insbesondere in feuchter Umgebung (Verklebung bei hoher Luftfeuchtigkeit und/oder von feuchten Werkstücken) auftretende Neigung zur Blasenbildung durch CO₂-Bildun sowie die Unmöglichkeit, unerwünschte Klebstoffverunreinigungen rückstandslos entfernen zu können. Letzteres gilt nicht nur für ausgehärtete sondern ebenso für frische PU-Klebstoffrückstände.

Eine alternative Härtungstechnologie, die zunehmend Anwendung im Klebstoffbereich findet, ist die Silanvernetzung, bei der alkoxysilanfunktionelle Prepolymere bei Kontakt mit Luftfeuchtigkeit zunächst hydrolysieren und anschließend durch eine Kondensationsreaktion aushärten. Die entsprechenden silanfunktionellen - meist silanterminierten - Prepolymere sind toxikologisch völlig unbedenklich.

Zwar wiesen herkömmliche silanvernetzende Systeme lange Zeit den Nachteil einer relativ geringen Härtungsgeschwindigkeit auf, jedoch wurden in jüngerer Zeit auch hochreaktive Systeme beschrieben, z.B. in EP 1414909 oder in EP 1421129.

DE 10 2007 011511 A1 beschreibt ein silanterminiertes Polyurethanprepolymer mit Polyurethanendgruppen, das in seinem Rückgrat Polyethereinheiten enthält, wobei die Polyethereinheiten eine mittlere Molmasse von 2000 aufweisen. Das Polymerrückgrat ist urethangruppenfrei.

Typische silanvernetzende Klebstoffe bestehen in ihrem Rückgrat aus langkettigen Polyethern, mit Molmassen, die meist in der Größenordnung von 10000 Dalton und höher liegen. Gelegentlich werden auch etwas kurzkettigere Polyether - typischerweise mit Molmassen 4000-8000 Dalton - eingesetzt, die mit Diisocyanaten dann zu längeren Einheiten verknüpft werden. Insgesamt werden somit auch hier sehr hochmolekulare Prepolymere erhalten, deren Rückgrat nach wie vor im Wesentlichen aus langkettigen Polyethereinheiten besteht, wobei die Polyetherkette durch einige wenige Urethaneinheiten unterbrochen ist. Derartige Systeme sind beispielsweise in WO 05/000931 beschrieben.

Nachteilig an all diesen gängigen silanvernetzenden Systemen ist jedoch eine relativ geringe Zugscherfestigkeit. Daher beschränken sich typische Anwendungen für diesen neuen Klebstofftyp in der Regel auf Bereiche, in denen eher elastische als hochreißfeste Klebstoffe benötigt werden. Klebstoffe, die den europäischen Standard DIN EN 204, Beanspruchungsgruppe D4, erfüllen, sind mit silanvernetzenden Klebstoffen bislang nicht erreichbar.

Gegenstand der Erfindung sind Zusammensetzungen (K), enthaltend
A) 100 Gewichtsteile eines silanterminierten Polyurethanprepolymers (STPU), das in seinem Rückgrat Urethaneinheiten und Einheiten (E) enthält, die ausgewählt werden aus Polyether- und Polyestereinheiten, wobei die einzelnen Polyether- bzw. Polyestereinheiten (E) eine mittlere Molmasse von maximal 4000 Dalton aufweisen, und das mindestens eine Endgruppe der allgemeinen Formel (1) aufweist

   -L¹-(CH₂)_{y}-SiR²₃₋ₓ(OR¹)ₓ (1),
B) 1 bis 200 Gewichtsteile eines silanterminierten Polyethers (STPE), das in seinem Rückgrat Polyethereinheiten mit einer mittleren Molmassen von 5000 bis 30000 Dalton und mit Endgruppen der allgemeinen Formel (2) aufweist

   -L²-(CH₂)ₘ-SiR⁴₃₋ₙ(OR³)ₙ (2),
C) 0 bis 10 Gewichtsteile eines Härtungskatalysator (HK) der die Aushärtung der Zusammensetzungen (K) in Gegenwart von Luftfeuchtigkeit beschleunigt, wobei
   - **L**¹: eine zweibindige Bindegruppe ausgewählt aus -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵),
   - **L²**: eine zweibindige Bindegruppe ausgewählt aus -O-, -S-, -(R⁶)N-, -O-CO-N(R⁶)-, -N(R⁶)-CO-O-, -N(R⁶)-CO-NH-, -NH-CO-N(R⁶)-, -N(R⁶)-CO-N(R⁶),
   - **R¹, R², R³** und **R⁴**: unsubstituierten oder halogensubstuierte Kohlenwasserstoffreste mit 1-6 Kohlenstoffatomen oder durch nicht benachbarte Sauerstoffatome unterbrochene Kohlenwasserstoffreste mit insgesamt 2-20 Kohlenstoffatomen,
   - **R⁵** und **R⁶**: Wasserstoff, einen unsubstituierten oder halogensubstuierten cyclischen, linearen oder verzweigten C₁ bis C₁₈-Alkyl- oder Alkenylrest, einen C₆- bis C₁₈-Arylrest oder einen Rest der Formel

   -(CH**₂**)_{y}-SiR²₃₋ₓ(OR¹)ₓ,
   - **y**: eine ganze Zahl von 1 bis 10,
   - **x**: 2 oder 3,
   - **n**: 1, 2 oder 3 und
   - **m**: eine ganze Zahl von 1 bis 10 bedeuten.

Vorzugsweise sind die silanterminierten Polyurethane (STPU) dadurch gekennzeichnet, dass sie aus Polyolen (P1), die ausgewählt werden aus Polyetherpolyolen, Polyesterpolyolen oder Mischungen aus verschiedenen Polyether- und/oder Polyesterpolyolen, hergestellt worden sind, wobei die Polyole (P1) bzw. Polyolmischungen (P1) eine mittlere Molmasse von höchstens 2000 Dalton aufweisen.

Besonders bevorzugt werden die silanterminierten Polyurethane (STPU) aus den oben genannten Polyolen (P1) bzw. Polyolmischungen (P1), Silanen (P2), die zum einen über eine isocyanatreaktive Gruppe oder aber eine Isocyanatgruppe und zum anderen über eine Silylgruppen der Formel (3)

-SiR²₃₋ₓ(OR¹)ₓ (3)

verfügen, wobei sämtliche Variablen die oben genannte Bedeutung aufweisen, mit Di- und/oder Triisocyanaten (P3) sowie gegebenenfalls weiteren Komponenten hergestellt. Dabei wird der Einsatz von Diisocyanaten und Polyole (P1) bzw. Polyolmischungen (P1) mit zwei und/oder drei Hydroxylgruppen und mit einer mittleren Molmasse von maximal 1000 Dalton besonders bevorzugt. Die silanterminierten Polyurethane (STPU) weisen vorzugsweise eine mittlere Molmasse von 400 bis 10000 Dalton, besonders bevorzugt von 800 bis 5000 Dalton auf.

Des weiteren sind die silanterminierten Polyurethane (STPU) vorzugsweise dadurch gekennzeichnet, dass sie neben den Silantermini der allgemeinen Formel (1) auch Termini der allgemeinen Formel (4)

L³-R⁷ (4),

besitzen, wobei
- **R**⁷: einen unsubstituierten oder halogensübatuierten linearen, verzweigten oder cyclischen Alkyl-, Alkenyl oder Arylalkylrest mit mindestens 7 Kohlenstoffatomen bedeuten und
- **L**³: eine zweibindige Bindegruppe ausgewählt aus -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵) bedeuten.

Vorzugsweise sind mindestens 2%, besonders bevorzugt mindestens 4% und vorzugsweise höchstens 40%, insbesondere höchstens 20% aller Kettenenden der silanterminierten Polyurethane (STPU) mit Gruppen der allgemeinen Formel (3) terminiert.

Bei dem silanterminierten Polyether (STPE) handelt es sich vor-, zugsweise um lineare Polypropylenglycole mit zwei Endgruppen der allgemeinen Formel (2) und mittleren Molmassen von 8000 bis 20000 Dalton. Die silanterminierten Polyether (STPE) weisen vorzugsweise keine zusätzlichen Urethaneinheiten im Polymerrückgrat auf. Die mittleren Molmassen der silanterminierten Polyether (STPE) ergeben sich vorzugsweise durch Addition der mittleren Molmassen der im Polymerrückgrat befindlichen Polyether und der zwei Endgruppen der allgemeinen Formel (2).

Der Erfindung liegen drei Entdeckungen zugrunde. So wurde erstens beobachtet, dass Zusammensetzungen (K) auf Basis der silanterminierten Polyurethane (STPU) zu deutlich härteren und zugscherfesteren Materialien aushärten, als Zusammensetzungen mit Prepolymeren auf Basis von langkettigen Polyolen, wie sie für herkömmliche silanvernetzende Kleb- und Dichtstoffe üblicherweise eingesetzt werden.

Ebenso überraschend war die zweite Entdeckung, nach der sich durch den erfindungsgemäßen Zusatz der silanterminierten Polyether (STPE) zu dem STPU-basierenden System zum einen zu einer deutlichen Reduktion der Viskosität der resultierenden Mischung führt. Dies ist umso überraschender, als dass die bevorzugten Molmassen der STPE-Prepolymere deutlich über den bevorzugten Molmassen der üblichen STPU-Prepolymere liegen.

Des Weiteren wurde entdeckt, dass der Zusatz der silanterminierten Polyether (STPE) zu dem STPU-basierenden System überraschenderweise zu einer Verbesserung der mechanischen Eigenschaften der resultierenden ausgehärteten Zusammensetzungen (K) führt. Insbesondere verleiht dieser Zusatz den ansonsten relativ spröden Massen überraschenderweise die für eine hohe Zugscherfestigkeit notwendige Elastizität. Ebenso überraschend ist die Tatsache, dass STPE-Zusatz die u.a. von der DIN EN 204 D4-Norm für Holzklebstoffe geforderte Beständigkeit gegen heißes Wasser massiv verbessert.

Der besonders bevorzugten Ausführungsform der Erfindung, nach der die silanterminierten Polyurethane (STPU) neben den Silantermini der allgemeinen Formel (1) auch noch über Termini der Formel (4) verfügen, liegt eine weitere überraschende Entdeckungen zugrunde.

So wurde entdeckt, dass durch den Einsatz der entsprechenden silanterminierte Polyurethane (STPU), die neben den Silantermini der allgemeinen Formel (1) auch über Kettentermini der allgemeinen Formel (4) verfügen, Zusammensetzungen (K) erhältlich sind, die nach ihrer Aushärtung gegenüber heißem Wasser deutlich beständiger sind, als ausgehärtete Zusammensetzungen (K), deren silanterminierte Polyurethane (STPU) über keinerlei Kettenenden der allgemeinen Formel (4) verfügen.

In den oben genannten Formeln steht **L¹** vorzugsweise für eine zweibindige Bindegruppe ausgewählt aus -O-CO-NH- oder -NH-CO-N(R³)-, wobei letztere besonders bevorzugt wird.

L² steht vorzugsweise für eine zweibindige Bindegruppe ausgewählt aus -O-, -NH-CO-O- und -O-CO-NH, wobei die letztgenannte Gruppe besonders bevorzugt wird.

L³ steht vorzugsweise für eine zweibindige Bindegruppe ausgewählt aus -NH-CO-N(R³)-, -N(R³)-CO-NH-, -O-CO-NH- und -NH-CO-O, wobei die letztgenannte Gruppe besonders bevorzugt wird.

Bei den Resten **R¹, R², R³** und **R⁴** handelt es sich bevorzugt um Kohlenwasserstoffreste mit 1 bis 6 Kohlenstoffatomen, insbesondere um einen Alkylrest mit 1 bis 4 Kohlenstoffatomen, wie Methyl- oder Ethyl- oder Propylreste. **R²** und **R⁴** stehen besonders bevorzugt für einen Methylrest, **R¹** und **R³** stellen besonders bevorzugt Methyl- oder Ethylreste dar.

Bei den Resten **R⁵** und **R⁶** handelt es sich bevorzugt um Wasserstoff oder einen Kohlenwasserstoffrest mit 1 bis 10 Kohlenstoffatomen, besonders bevorzugt um Wasserstoff, einen verzweigten oder unverzweigten Alkylrest mit 1 bis 6 Kohlenstoffatomen, wie Methyl- oder Ethyl- oder Propylreste, einen Cyclohexylrest oder um einen Phenylrest.

**y** und **m** stehen vorzugsweise für 1 oder 3, besonders bevorzugt für 1. Der letztgenannte Wert wird deshalb besonders bevorzugt, weil sich die entsprechenden silanterminierten Polyurethane (STPU) bzw. silanterminierten Polyether (STPE), bei denen die Silylgruppe nur durch einen Methylenspacer von einem benachbarten Heteroatom getrennt ist, durch eine besonders hohe Reaktivität gegenüber Luftfeuchtigkeit auszeichnen. Die resultierenden Zusammensetzungen (K) weisen entsprechend kurze Abbindezeiten auf und benötigen zudem in der Regel keine schwermetallhaltigen, insbesondere keine zinnhaltigen Katalysatoren mehr.

Die Variable n steht vorzugsweise für 2 oder 3.

Bei dem Rest **R⁷** handelt es sich vorzugsweise um einen linearen, oder verzweigten Alkyl- oder Alkenylrest mit mindestens 8 Kohlenstoffatomen, wobei lineare Alkylreste mit mindestens 8 Kohlenstoffatomen, insbesondere Alkylreste mit mindestens 10 Kohlenstoffatomen besonders bevorzugt werden. Vorzugsweise weist **R⁷** höchstens 30, besonders bevorzugt höchstens 20 Kohlenstoffatome auf.

Bei der Herstellung der silanterminierten Polyurethane (STPU) wird vorzugsweise von Polyether- und/oder Polyesterpolyolen (P1) mit einer mittleren Molmasse von maximal 2000, insbesondere maximal 1500 Dalton ausgegangen, wobei Polyetherpolyole besonders bevorzugt werden. Ganz besonders bevorzugt werden Polyetherpolyole mit einer mittleren Molmasse von maximal 1000 Dalton. Die bevorzugten Polyethertypen sind Polyethylenglycole und insbesondere Polypropylenglycole. Die Polyole (P1) können verzweigt oder unverzweigt sein. Besonders bevorzugt werden unverzweigte Polyole oder aber Polyole mit einer Verzweigungsstelle. Es können auch Mischungen aus verzweigten und unverzweigten Polyolen eingesetzt werden.

Vorzugsweise werden die Polyole (P1) bei der Herstellung der silanterminierten Polyurethane (STPU) mit mindestens einer isocyanatfunktionellen Verbindung umgesetzt. Die Herstellung der silanterminierten Polyurethane (STPU) erfolgt gegebenenfalls in Gegenwart eines Katalysators. Geeignete Katalysatoren sind beispielsweise bismuthaltige Katalysatoren, wie z.B. der Borchi^{®} Kat 22, Borchi^{®} Kat VP 0243, Borchi^{®} Kat VP 0244 der Fa. Borchers GmbH oder auch diejenigen Verbindungen, die der Zusammensetzung (K) als Härtungskatalysatoren (HK) zugesetzt werden.

Die Prepolymersynthese wird vorzugsweise bei Temperaturen von mindestens 0°C, besonders bevorzugt mindestens 60°C und vorzugsweise höchstens 150 °C, insbesondere höchstens 120 °C durchgeführt. Sie kann kontinuierlich oder diskontinuierlich erfolgen.

Bei einer bevorzugten Herstellungsweise der silanterminierten Polyurethane (STPU) werden die oben genannten Polyole bzw. Polyolmischungen (P1) mit einem Silan (P2) der allgemeinen Formel (5)

OCN-(CH₂)_{y}-SiR²₃₋ₓ(OR¹)ₓ (5),

umgesetzt, wobei **R¹**, **R² x** und **y** die bei der allgemeinen Formel (1) angegebenen Bedeutungen aufweisen.

Zudem wird als dritte Prepolymerkomponente auch noch ein Di- oder Polyisocyanat (P3) eingesetzt. Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder aber Trimerisate (Biurethe oder Isocyanurate) der oben genannten Diisocyanate.

Schließlich können als vierte Prepolymerkomponente auch noch monomere Alkohole (P4) eingesetzt werden. Diese können über eine aber auch über mehrere Hydroxylgruppen verfügen. Hinsichtlich der Molmasse und des Verzweigungsgrades der Alkohole (P4) gibt es keinerlei Beschränkungen.

Bevorzugt werden als Alkohole (P4) Verbindungen der allgemeinen Formel (6)

R⁷OH (6)

eingesetzt, wobei R⁷ die bei der allgemeinen Formel (4) angegebene Bedeutung aufweist. Diese Alkohole bilden bei der Synthese der Prepolymere silanterminierte Polyurethane (STPU) durch eine Reaktion mit den Di- oder Polyisocyanaten (P3) Kettentermini der allgemeinen Formel (4).

Vorzugsweise werden alle Prepolymerkomponenten in einem Mengenverhältnis eingesetzt, nach dem auf 1 Isocyanatgruppe vorzugsweise mindestens 0,6, besonders bevorzugt mindestens 0,8 und vorzugsweise höchstens 1,4, insbesondere höchstens 1,2 isocyanatreaktive Gruppen kommen.

Das Reaktionsprodukt ist bevorzugt isocyanatfrei. Die Reihenfolge, in denen die Komponenten (P1) bis (P4) miteinander zur Reaktion gebracht werden ist dabei beliebig.

Bei einem weiteren bevorzugten Herstellverfahren für die silanterminierten Polyurethane (STPU) werden die oben genannten Polyole oder Polyolmischungen (P1) mit einem Di- oder Polyisocyanat (P3') eingesetzt. Dabei können dieselben isocyanatfunktionellen Verbindungen eingesetzt werden, die oben bereits als Isocyanate (P3) beschrieben worden sind. Die Isocyanate (P3') werden dabei im Überschuss eingesetzt, so dass ein isocyanatterminiertes "Zwischenprepolymer" (ZW) erhalten wird.

Dieses "Zwischenprepolymer" (ZW) wird dann in einem zweiten Reaktionsschritt mit einem isocyanatreaktiven Silan (P2') der allgemeinen Formel (7)

B-(CH₂)_{y}-SiR²₃₋ₓ(OR¹)ₓ (7),

umgesetzt, wobei B eine isocyanatreaktive Gruppe, vorzugsweise eine Hydroxylgruppe oder besonders bevorzugt eine Aminogruppe der Formel **NHR⁵** darstellt und **x, y, R¹**, **R²** und **R⁵** die oben angegebenen Bedeutungen aufweisen.

Die Reihenfolge der Syntheseschritte ist dabei prinzipiell auch austauschbar. So kann der erste Syntheseschritt prinzipiell auch in einer Reaktion des Isocyanates (P3') mit dem Silan (P2') bestehen und die Reaktion mit dem Polyol (P1) erst im zweiten Reaktionsschritt stattfinden. Ebenso ist es denkbar, beide Reaktionsschritte gleichzeitig durchzuführen. Auch diese Reaktionen können sowohl diskontinuierlich als auch kontinuierlich durchgeführt werden.

Schließlich können auch hier monomere Alkohole (P4') als vierte Prepolymerkomponente mit in das silanterminierten Polyurethane (STPU) eingebaut werden. Die Alkohole (P4') können über eine aber auch über mehrere Hydroxylgruppen verfügen. Hinsichtlich der Molekülmasse und des Verzweigungsgrades der Alkohole (P4') gibt es keinerlei Beschränkungen.

Bevorzugt werden als Alkohole (P4') Verbindungen der oben genannten allgemeinen Formel (6) eingesetzt. Es resultieren silanterminierten Polyurethane (STPU), deren Kettenenden nicht ausschließlich silanterminiert sind, sondern auch über einen gewissen Anteil, vorzugsweise mindestens 2%, besonders bevorzugt mindestens 4% und vorzugsweise höchstens 40%, insbesondere höchstens 20% an Kettenenden der allgemeinen Formel (4) verfügen.

Die Alkohole (P4') können dabei in einem separaten Reaktionsschritt in die silanterminierten Polyurethane (STPU) eingebaut werden, z.B. vor oder nach der Reaktion der Polyole (P1) mit den Isocyanaten (P3'). Alternativ kann der Einbau aber auch gleichzeitig mit einem anderen Reaktionsschritt erfolgen, z.B. indem eine Mischung aus den Polyolen (P1) und den Alkoholen (P4') mit den Isocyanaten (P3') zur Reaktion gebracht wird.

Vorzugsweise werden dabei Alkohole (P4'), Mischungen verschiedener Alkoholen (P4') oder aber Mischungen aus Polyolen (P1) und Alkoholen (P4') eingesetzt, die bei Raumtemperatur flüssig sind und dementsprechend einfach zu der Reaktionsmischung zudosiert werden können.

Auch bei diesem zweiten bevorzugten Herstellverfahren für die silanterminierten Polyurethane (STPU) werden alle Prepolymerkomponenten in einem Mengenverhältnis eingesetzt, nach dem auf 1 Isocyanatgruppe vorzugsweise mindestens 0,6, besonders bevorzugt mindestens 0,8 und vorzugsweise höchstens 1,4, insbesondere höchstens 1,2 isocyanatreaktive Gruppen kommen. Das Reaktionsprodukt ist bevorzugt isocyanatfrei.

Beispiele für silanterminierte Polyether sind Produkte der Fa. Kaneka, die unter der Marke Kaneka MS-Polymer^{®} kommerziell erhältlich sind, oder Produkte der Fa. Wacker, die unter der Marke GENTOSIL^{®} STP-E, z.B. STP-E10, STP-E30, STP-E15 oder STP-E35, erhältlich sind.

Bei der Formulierung der Zusammensetzung (K) werden auf 100 Gewichtsteile silanterminierter Polyurethane (STPU) vorzugsweise mindestens 1, besonders bevorzugt mindestens 5 und vorzugsweise höchstens 50, insbesondere höchstens 20 Gewichtsteile silanterminierter Polyether (STPE) eingesetzt.

Die Zusammensetzungen (K) enthalten vorzugsweise auch Härtungskatalysatoren (HK). Zudem können sie Wasserfänger und Silanvernetzer (WS), Füllstoffe (F), Weichmacher (W), Haftvermittler (H), Rheologiehilfsmittel (R) und Stabilisatoren (S), gegebenenfalls zusätzlich auch noch Farbpigmente sowie weitere übliche Hilf- und Zusatzstoffe enthalten.

Als Härtungskatalysatoren (HK) können dabei beispielsweise Titanatester, wie Tetrabutyltitanat, Tetrapropyltitanat, Tetraisopropyltitanat, Tetraacetylacetonat-titanat; Zinnverbindungen, wie Dibutylzinndilaurat, Dibutylzinnmaleat, Dibutylzinndiacetat, Dibutylzinndioctanoat, Dibutylzinnacetylacetonat, Dibutytzinnoxid, oder entsprechende Verbindungen des Dioctylzinn, basische Katalysatoren, z.B. Aminosilane wie Aminopropyltrimethoxysilan, Aminopropyltriethoxysilan, Aminopropyl-methyldimethoxysilan, Aminopropyl-methyldiethoxysilan, N-(2-Aminoethyl)-aminopropyltrimethoxysilan, N-(2-Aminoethyl)-aminopropyltrimethoxysilan, N-(2-Aminoethyl)-aminopropyltriethoxysilan, N-(2-Aminoethyl)-aminopropyl-methyldimethoxysilan, N-Cyclohexylaminomethyltriethoxysilan, N-Cyclohexylaminomethyl-methyldiethoxysilan, N-Cyclohexylaminomethyltrimethoxysilan, N-Cyclohexylaminomethyl-methyldimethoxysilan und andere organische Amine, wie Triethylamin, Tributylamin, 1,4-Diazabicyclo[2,2,2]octan, N,N-Bis-(N,N-dimethyl-2-amino-ethyl)-methylamin, N,N-Dimethylcyclohexylamin, N,N-Dimethylphenlyamin, N-Ethylmorpholin oder saure Katalysatoren, wie Phosphorsäure- bzw. Phosphorsäureester, Toluolsulfonsäuren, Mineralsäuren dienen, wobei schwermetallfreie Katalysatoren bevorzugt werden.

Auf 100 Gewichststeile eilanterminierte Polyurethane (STPU) werden vorzugsweise mindestens 0,01 Gewichtsteile, besonders bevorzugt mindestens 0,05 Gewichtsteile und vorzugsweise höchstens 10 Gewichtsteile, insbesondere höchstens 1 Gewichtsteile, Härtungskatalysatoren (HK) eingesetzt. Die verschiedenen Katalysatoren können sowohl in reiner Form als auch als Mischungen verwendet werden.

Als Wasserfänger und Silanvernetzer (WS) können beispielsweise Vinylsilane wie Vinyltrimethoxy-, Vinyltriethoxy-, Vinylmethyldimethoxy-, Glycidoxypropyltrimethoxysilan, Glycidoxypropyltriethoxysilan, O-Methylcarbamatomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, allgemein Alkylalkoxysilane oder aber auch weitere organofunktionelle Silane dienen. Selbstverständlich können hier auch dieselben Aminosilane eingesetzt werden, die bereits bei den Kondensationskatalysatoren (KK) beschrieben worden sind. Diese Silane nehmen dann oft eine Doppelfunktion als Katalysator und Vernetzersilan ein. Sämtlichen Silanvernetzer (S) - insbesondere sämtliche Silane mit Amino- oder Glycidoxyfunktionen - können zudem auch als Haftvermittler fungieren.

Auf 100 Gewichtsteile silanterminierte Polyurethane (STPU) werden vorzugsweise 0 bis 20 Gewichtsteile, besonders bevorzugt 0 bis 4 Gewichtsteile Wasserfänger und Silanvernetzer (WS) eingesetzt. Die verschiedenen Wasserfänger und Silanvernetzer (WS) können sowohl in reiner Form als auch als Mischungen verwendet werden.

Als Füllstoffe (F) können beispielsweise Calciumcarbonate in Form von natürlichen gemahlenen Kreiden, gemahlenen und beschichteten Kreiden, gefällten Kreiden, gefällten und beschichteten Kreiden, Tonmineralien, Bentonite, Kaoline, Talkum, Titandioxide, Aluminiumoxide, Aluminiumtrihydrat, Magnesiumoxid, magnesiumhydroxid, Ruße, gefällte oder pyrogene, hydrophile oder hydrophobe Kieselsäuren dienen.

Bevorzugt werden Calciumcarbonate und gefällte oder pyrogene, hydrophile oder hydrophobe Kieselsäuren, besonders bevorzugt pyrogene, hydrophile oder hydrophobe Kieselsäuren, insbesondere pyrogene, hydrophile Kieselsäuren als Füllstoff (F) verwendet.

Auf 100 Gewichtsteile silanterminierte Polyurethane (STPU) werden vorzugsweise 0 bis 200 Gewichtsteile, besonders bevorzugt 0 bis 100 Gewichtsteile Füllstoffe (F) eingesetzt.

Als Weichmacher (W) können der erfindungsgemäßen Zusammensetzung (K) beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Sulfonsäureester, Polyester, Polyether, Polystyrole, Polybutadiene, Polyisobutene, paraffinische Kohlenwasserstoffe, höhere, verzweigte Kohlenwasserstoffe etc. dienen.

Auf 100 Gewichtsteile silanterminierte Polyurethane (STPU) werden vorzugsweise 0 bis 50 Gewichtsteile Weichmacher (W) eingesetzt.

Einen besonders günstigen weichmachertyp stellen dabei Silane (WS) der allgemeinen Formel (8)

R⁸SiR⁹_{3-z}(OR¹⁰)_{z} (8)

dar, wobei
- **R⁸**: einen unsubstituierten oder halogensubstuierten linearen, verzweigten oder cyclischen Alkyl-, Alkenyl oder Arylalkylrest mit mindestens 7 Kohlenstoffatomen,
- **R⁹** und **R¹⁰**: unsubstituierte oder halogensubstuierte Kohlenwasserstoffreste mit 1-6 Kohlenstoffatomen oder durch nicht benachbarte Sauerstoffatome unterbrochene Kohlenwasserstoffreste mit insgesamt 2-20 Kohlenstoffatomen und
- **z**: 1, 2 oder 3 bedeuten.

Bei dem Rest **R⁸** handelt es sich vorzugsweise um einen linearen, oder verzweigten Alkyl- oder Alkenylrest mit mindestens 8 Kohlenstoffatomen, wobei Alkylreste mit mindestens 8 Kohlenstoffatomen, insbesondere Alkylreste mit mindestens 12 Kohlenstoffatomen besonders bevorzugt werden. Vorzugsweise weist **R⁸** höchstens 40, besonders bevorzugt höchstens 25 Kohlenstoffatome auf. Bei den Resten **R⁹** und **R¹⁰** handelt es sich bevorzugt um Kohlenwasserstoffreste mit 1 bis 6 Kohlenstoffatomen, insbesondere um einen Alkylrest mit 1 bis 4 Kohlenstoffatomen, wie Methyl- oder Ethyl- oder Propylreste. **R⁹** steht besonders bevorzugt für einen Methylrest, **R¹⁰** stellt besonders bevorzugt Ethyl- oder Ethylreste dar. Die Variable z steht vorzugsweise für 2 oder 3, besonders bevorzugt für 3.

Besonders bevorzugte Silane (WS) sind n-Octyltrimethoxysilan, i-Octyltrimethoxysilan, n-Octyltriethoxysilan, i-Octyltriethoxysilan, die diversen Stereoisomere des Nonyltrimethoxysilan, Decyltrimethoxysilan, Undecyltrimethoxysilan, Dodecyltrimethoxysilan, Tridecyltrimethoxysilan, Tetradecyltrimethoxysilan, Pentadecyltrimethoxysilan, Hexadecyltridecyltrimethoxysilan, Heptadecyltrimethoxysilan, Octadecyltrimethoxysilan, Nonadecyltrimethoxysilan sowie die korrespondierenden Triethoxysilane. Besonders bevorzugt wird n-Hexadecyltrimethoxysilan.

Der Vorteil der silanfunktionellen Weichmacher (WS) liegt in der Tatsache, dass diese Weichmacher bei der Härtung der erfindungsgemäßen Zusammensetzung (K) chemisch in das entstehende Netzwerk eingebaut werden. Dies führt zum einen zu einer Verbesserung der Mechanik, insbesondere der elastischen Eigenschaften, des resultierenden Klebstoffes. Zum anderen wird so ein langsames Ausschwitzen des Weichmachers sicher ausgeschlossen.

Bei der Formulierung der Zusammensetzung (K) werden auf 100 Gewichtsteile silanterminierte Polyurethane (STPU) höchstens 40 Gewichtsteile, bevorzugt höchstens 30 Gewichtsteile und besonders bevorzugt höchstens 20 Gewichtsteile Silan (WS) eingesetzt. Werden Silane (WS) eingesetzt, so werden vorzugsweise mindestens 3 und besonders bevorzugt mindestens 5 Gewichtsteile Silan (WS) auf 100 Gewichtsteile silanterminierte Polyurethane (STPU) eingesetzt.

Einen weiteren besonders bevorzugten Additivtyp für die Zusammensetzung (K) stellen Alkohole (A) der allgemeinen Formel (9)

R¹¹OH (9)

dar, wobei
- R¹¹: einen unsubstituierten oder halogensubstuierten Kohlenwasserstoffrest mit 1-20 Kohlenstoffatomen oder durch nicht benachbarte Sauerstoffatome unterbrochene Kohlenwasserstoffrest mit insgesamt 2-20 Kohlenstoffatomen bedeutet.

Vorzugsweise handelt es sich bei dem Rest R¹¹ um einen Alkylrest mit 1-8 Kohlenstoffatomen und besonders bevorzugt um Methyl-, Ethyl-, Isopropyl-, Propyl-, Butyl-, Isobutyl-, tert-Butyl-, Pentyl-, Cyclopentyl-, Isopenty-, tert-Butyl-, Hexyl- oder Cyclohexylreste. Besonders geeignete Alkohole (A) sind Ethanol und Methanol.

So wurde gefunden, dass der erfindungsgemäße Zusatz von Alkoholen (A) zu den erfindungsgemäßen Zusammensetzungen (K) deren Viskosität auch bei nur sehr kleinen Zusatzmengen massiv erniedrigt. Die Viskositätsabnahme ist dabei deutlich stärker als dies bei Zusätzen anderer niedermolekularer Verbindungen und/oder Lösungsmittel der Fall ist.

Bei der Formulierung der Zusammensetzung (K) werden auf 100 Gewichtsteile silanterminierte Polyurethane (STPU) höchstens 30 Gewichtsteile, bevorzugt höchstens 15 Teile und besonders bevorzugt höchstens 5 Gewichtsteile Alkohol (A) eingesetzt. Werden Alkohole (A) eingesetzt, so werden vorzugsweise mindestens 0,5 Gewichststeile und besonders bevorzugt mindestens 1 Gewichtsteile Alkohol (A) auf 100 Gewichtsteile silanterminierte Polyurethane (STPU) eingesetzt.

Beispiele für Haftvermittler (H) sind Silane und Organopolysiloxane mit funktionellen Gruppen, wie beispielsweise solche mit Glycidoxypropyl-, Aminopropyl-, Aminoethylaminpropyl-, Ureidopropyl- oder Methacryloxypropylresten. Falls jedoch bereits eine andere Komponente, wie etwa der Härtungskatalysator (HK) oder der Wasserfänger und Silanvernetzer (WS), die genannten funktionellen Gruppen aufweist, kann auf einen Zusatz von Haftvermittler (H) auch verzichtet werden.

Als Rheologieadditive (R) können z.B. Thixotropiermittel eingesetzt werden. Beispielhaft genannt seien hier hydrophile pyrogene Kieselsäuren, beschichtete pyrogene Kieselsäuren, gefällte Kieselsäuren, Polyamidwachse, hydrierte Ricinusöle, Stearatsalze oder gefällte Kreiden. Auch die o.g. Füllstoffe können zur Einstellung der Fließeigenschaften benutzt werden.

Auf 100 Gewichtsteile silanterminierte Polyurethane (STPU) werden vorzugsweise 0 bis 10 Gewichtsteile, besonders bevorzugt 0 bis 5 Gewichtsteile Thixotropiermittel eingesetzt.

Als Stabilisatoren (S) können beispielsweise Antioxidantien oder Lichtschutzmittel, wie sogenannte HALS-Stabilisatoren, sterisch gehinderte Phenole, Thioether oder Benzotriazolderivate verwendet werden.

Zudem kann die Zusammensetzung (K) auch noch weitere Additive, z.B. Lösungsmittel, Fungizide, Biozide, Flammschutzmittel und Pigmente enthalten.

Die Zusammensetzungen (K) sind nach dem Aushärten sehr zugscherfest. Sie werden vorzugsweise als Klebstoffe (K) und vorzugsweise für Verklebungen eingesetzt, die nach dem Aushärten eine Zugscherfestigkeit von mindestens 7 mPa, bevorzugt mindestens 8 mPa und besonders bevorzugt mindestens 10 mPa aufweisen. Bevorzugt werden sie zum Verkleben von Holz eingesetzt, d.h. bei Verklebungen, bei denen mindestens eines der zu verklebenden Substrate - vorzugsweise beide zu verklebenden Substrate - aus Holz sind. Die Klebstoffe (K) sind dabei zum Verkleben jedweder Holztypen geeignet. Besonders bevorzugt werden sie für Verklebungen eingesetzt die nach der Aushärtung die DIN EN 204 D1-, D2-, D3- und/oder D4-Normen erfüllen.

Des Weiteren sind sie auch für zugscherfeste Verklebungen zahlreicher weiterer Substrate, insbesondere von Metallen, Kunststoffen, Glas, Keramik, Beton, Steinmaterialien, Papier, Pappe oder Leder geeignet.

Alle vorstehenden Symbole der vorstehenden Formeln weisen ihre Bedeutungen jeweils unabhängig voneinander auf. In allen Formeln ist das Siliciumatom vierwertig. Alle mittleren Molmassen sind Zahlenmittel Mₙ.

In den folgenden Beispielen sind, soweit nicht anders angegeben, alle Mengen- und Prozentangaben auf das Gewicht bezogen, alle Drücke 0,10 MPa (abs.) und alle Temperaturen 20°C,

### Beispiele

### Beispiel 1:

In einem 500 ml Reaktionsgefäß mit Rühr-, Kühl- und Heizmöglichkeiten werden 109,8 g (630,5 mmol) Toluen-2,4-diisocyanat (TDI) vorgelegt und auf 60 °C erwärmt. Dann wird eine Mischung aus 20,7 g (85,4mmol) Hexadecylalkohol und 124,8 g (293,6 mmol) eines Polypropylenglycols mit einer mittleren Molmasse von 425 g/mol zugegeben. Die Temperatur der Reaktionsmischung sollte dabei nicht über 80 °C ansteigen. Anschließend wird für 60 min bei 60 °C nachgeführt.

Anschließend kühlt man auf etwa 50 °C ab und gibt 7,5 ml Vinyltrimethoxysilan hinzu. Danach werden 0,42 g Jeffcat^{®} DMDLS der Fa. Huntsman und 120,0 g (567,8 mmol) *N*-Phenylaminomethyl-methyldimethoxysilan (GENIOSIL^{®} XL 972 der Wacker Chemie AG) hinzugegeben, wobei die Temperatur nicht auf über 80 °C steigen sollte. Danach wird für weitere 60 min bei 60 °C nachgerührt. In der resultierenden Prepolymermischung lassen sich IR-spektroskopisch keine Isocyanatgruppen mehr nachweisen. Man erhält eine klare, durchsichtige Prepolymermischung, die bei 50°C eine Viskosität von 13,5 Pas aufweist. Sie lässt sich problemlos weiterverarbeiten.

### Beispiel 2 (Herstellung einer 1K-Klebstoffformulierung aus oben genannten Prepolymer)

87,7 g Prepolymer aus Beispiele 1, 9, 8 g silan-terminiertes Polypropylenglycol mit Endgruppen der allgemeinen Formel (2) mit m = 3, R³ = Ethylrest und n = 3 (GENIOSIL^{®} STP-E 15 der Wacker Chemie AG) und 2,5 g 3-Aminopropyltrimethoxysilan (GENIOSIL^{®} GF 96 der Wacker Chemie AG) werden in einem geeigneten Mischgerät zusammengerührt. Man erhält einen gelblichen Klebstoff mit einer Viskosität von 350 Pas (Brookfield, Spindel 6, 2,5 min⁻¹). Mit diesem Klebstoff werden Buchenhölzer wie in der DIN EN 204 beschrieben verklebt und die zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,0 |
| D2 (Lagerungsfolge 2) | 8,9 |
| D3 (Lagerungsfolge 3) | 3,6 |
| D3 (Lagerungsfolge 4) | 8,6 |
| D4 (Lagerungsfolge 5) | 4,0 |

### Beispiel 3 (Herstellung einer 1K-Klebstoffformulierung aus oben genannten Prepolymer)

44,3 g Prepolymer aus Beispiel 1, 4,9 g GENIOSIL^{®} STP-E 15, 1,5 g Vinyltrimethoxysilan (GENIOSIL^{®} XL 10 der Wacker Chemie AG), 47,8 g Martinal OL 104 und 1,5 g 3-Aminopropyltrimethoxysilan (GENIOSIL^{®} GF 96 der Wacker Chemie AG) werden in einem geeigneten Mischgerät zusammengerührt. Man erhält einen beigen Klebstoff mit einer Viskosität von 2700 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 13,2 |
| D2 (Lagerungsfolge 2) | 9,1 |
| D3 (Lagerungsfolge 3) | 3,6 |
| D3 (Lagerungsfolge 4) | 7,8 |
| D4 (Lagerungsfolge 5) | 4,3 |

### Beispiel 4 (Herstellung einer 1K-Klebatoffformulierung aus oben genannten Prepolymer)

84,8 g Prepolymer aus Beispiel 1, 9,4 g GENIOSIL^{®} STP-E 15, 2,9 g Vinyltrimethoxysilan (GENIOSIL^{®} XL 10 der Wacker Chemie AG) und 2,9 g N-(2-Aminoethyl)3-Aminopropyltrimethoxysilan (GENIOSIL^{®} GF 9 der Wacker Chemie AG) werden in einem geeigneten Mischgerät zusammengerührt. Man erhält einen gelblichen Klebstoff mit einer Viskosität von 130 Pas (Brookfield, Spindel 6, 2,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 16,2 |
| D2 (Lagerungsfolge 2) | 9,3 |
| D3 (Lagerungsfolge 3) | 3,6 |
| D3 (Lagerungsfolge 4) | 9,5 |
| D4 (Lagerungsfolge 5) | 4,4 |

### Beispiel 5 (Herstellung einer 1K-Klebstoffformulierung aus oben genannten Prepolymer)

44,3 g Prepolymer aus Beispiel 1, 4,9 g GENTOSIL^{®} STP-E 15, 1,5 g Vinyltrimethoxysilan (GENIOSIL^{®} XL 10 der Wacker Chemie AG), 47,8 g Martinal OL 104 und 1,5 g N-(2-Aminoethyl)3-Aminopropyltrimethoxysilan (GENIOSIL^{®} GF 9 der Wacker Chemie AG) werden in einem geeigneten Mischgerät zusammengerührt. Man erhält einen beigen Klebstoff mit einer Viskosität von 2700 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 15,0 |
| D2 (Lagerungsfolge 2) | 9,5 |
| D3 (Lagerungsfolge 3) | 4,2 |
| D3 (Lagerungsfolge 4) | 12,2 |
| D4 (Lagerungsfolge 5) | 4,4 |

### Beispiel 6 (Herstellung einer 1K-Klebstoffformulierung aus oben genannten Prepolymer)

67,9 g Prepolymer aus Beispiel 1, 7,5 g GENIOSIL^{®} STP-E 15, 2,3 g Vinyltrimethoxysilan (GENIOSIL^{®} XL 10 der Wacker Chemie AG), 20,0 g Ethanol und 2,3 g N-(2-Aminoethyl)3-Aminopropyltrimethoxysilan (GENIOSIL^{®} GF 9 der Wacker Chemie AG) werden in einem geeigneten Mischgerät zusammengerührt. Man erhält einen beigen Klebstoff mit einer Viskosität von 1 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 17,0 |
| D2 (Lagerungsfolge 2) | 11,1 |
| D3 (Lagerungsfolge 3) | 4,9 |
| D3 (Lagerungsfolge 4) | 15,4 |
| D4 (Lagerungsfolge 5) | 5,0 |

### Beispiel 7 (Herstellung einer 1K-Klebstoffformulierung aus oben genannten Prepolymer)

67,9 g Prepolymer aus Beispiel 1, 7,5 g GENIOSIL^{®} STP-E 15, 2,3 g Vinyltrimethoxysilan (GENIOSIL^{®} XL 10 der Wacker Chemie AG), 20,0 g Ethanol und 2,3 g 3-Aminopropyltrimethoxysilan (GENIOSIL^{®} GF 96 der Wacker Chemie AG) werden in einem geeigneten Mischgerät zusammengerührt. Man erhält einen beigen Klebstoff mit einer Viskosität von 1 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 16,6 |
| D2 (Lagerungsfolge 2) | 11,0 |
| D3 (Lagerungsfolge 3) | 4,9 |
| D3 (Lagerungsfolge 4) | 15,3 |
| D4 (Lagerungsfolge 5) | 5,7 |

### Beispiel 8 (Herstellung einer 1K-Klebstoffformulierung aus oben genannten Prepolymer)

79,8 g Prepolymer aus Beispiel 1, 8,9 g GENIOSIL^{®} STP-E 15, 9,8 g Hexadecyltrimethoxysilan und 1,5 g 3-Aminopropyltrimethoxysilan (GENIOSIL^{®} GF 96 der Wacker Chemie AG) werden in einem geeigneten Mischgerät zusammengerührt. Man erhält einen beigen Klebstoff mit einer Viskosität von 60 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 14,1 |
| D2 (Lagerungsfolge 2) | 8,2 |
| D3 (Lagerungsfolge 3) | 3,0 |
| D3 (Lagerungsfolge 4) | 8,3 |
| D4 (Lagerungsfolge 5) | 3,3 |

### Beispiel 9 (Herstellung einer 1K-Klebstoffformulierung aus oben genannten Prepolymer)

41,1 g Prepolymer aus Beispiel 1, 4,6 g GENIOSIL^{®} STP-E 15, 5,0 g Hexadecyltrimethoxysilan, 47,8 g Martinal OL 104 und 1,5 g 3-Aminopropyltrimethoxy-silan (GENIOSIL^{®} GF 96 der Wacker Chemie AG) werden in einem geeigneten Mischgerät zusammengerührt. Man erhält einen beigen Klebstoff mit einer Viskosität von 2500 Pas (Brookfield, Spindel 7, 0,5 min⁻¹). Mit diesem Klebstoff werden Buchenhölzer wie in der DIN EN 204 beschrieben verklebt und die Zugscherfestigkeiten bestimmt. Dabei werden für diese Formulierung folgenden Werte erzielt:

| Beanspruchungsgruppe | Klebfestigkeit N/mm² |
|---|---|
| | |
| D1 (Lagerungsfolge 1) | 13,3 |
| D2 (Lagerungsfolge 2) | 8,0 |
| D3 (Lagerungsfolge 3) | 3,2 |
| D3 (Lagerungsfolge 4) | 8,1 |
| D4 (Lagerungsfolge 5) | 3,3 |

### Beispiel 10 (Viskositätserniedrigung eines silanterminierten Polyurethanprepolymers durch Zusatz eines silanterminierten Polyethers)

Das silanterminierte Prepolymer nach Beispiel 1 weist bei 20 °C eine Viskosität von ca. 1930000 mPas auf. Eine Mischung bestehend aus 90 Gew.-% eines silanterminierten Prepolymers nach Beispiel 1 und 10 Gew.-% eines silanterminierten Polyethers mit einer mitteren Molmasse von ca. 12.000 Dalton und einer Viskosität bei 20 °C von ca. 10000 (GENIOSIL^{®} STP-E 15) weist bei 20 °C eine Viskosität von nur ca. 755000 mPas auf.

D.h. durch den GENIOSIL^{®} STP-E 15-Zusatz wird eine Erniedrigung der Viskosität um einen Faktor von ca. 2,5 erreicht und liegt damit dramatisch unter dem linearen Mittel, nach dem bei dem o.g. Mengenverhältnis beider Polymertypen eine Viskosiät von ca. 1740000 mPas zu erwarten gewesen wäre.

Diese deutliche Viskositätserniedrigung ist um so überraschender, als GENIOSIL^{®} STP-E 15 eine mittere Molmasse aufweist, die beinahe zehnmal größer ist als die mittlere Molmasse des silanterminierten Prepolymers nach Beispiel 1. D.h. das molare Verhältnis beider Polymertypen liegt beinahe bei 99 : i.

## Patentansprüche

1. Zusammensetzungen (K), enthaltend
A) 100 Gewichtsteile eines silanterminierten Polyurethanprepolymers (STPU), das in seinem Rückgrat Urethaneinheiten und Einheiten (E) enthält, die ausgewählt werden aus Polyether- und Polyestereinheiten, wobei die einzelnen Polyether- bzw. Polyestereinheiten (E) eine mittlere Molmasse Mₙ von maximal 4000 Dalton aufweisen, und das mindestens eine Endgruppe der allgemeinen Formel (1) aufweist
-L¹-(CH²)_{y}-SiR²₃₋ₓ(OR¹)ₓ (1),
B) 1 bis 200 Gewichtsteile eines silanterminierten Polyethers (STPE), das in seinem Rückgrat Polyethereinheiten mit einer mittleren Molmassen Mₙ von 5000 bis 30000 Dalton und mit Endgruppen der allgemeinen Formel (2) aufweist
-L²-(CH₂)ₘ-SiR⁴₃₋ₙ(OR³)ₙ (2),
C) 0 bis 10 Gewichtsteile eines Härtungskatalysators (HK) der die Aushärtung der Zusammensetzungen (K) in Gegenwart von Luftfeuchtigkeit beschleunigt, wobei
L¹ eine zweibindige Bindegruppe ausgewählt aus -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵),
**L²** eine zweibindige Bindegruppe ausgewählt aus -O-, -S-, -(R⁶)N-, -O-CO-N(R⁶)-, -N(R⁶)-CO-O-, -N(R⁶)-CO-NH-, -NH-CO-N(R⁶)-, -N(R⁶)-CO-N(R⁶),
**R¹**, **R²**, **R³** und **R⁴** unsubstituierte oder halogensubstuierte Kohlenwasserstoffreste mit 1-6 Kohlenstoffatomen oder durch nicht benachbarte Sauerstoffatome unterbrochene Kohlenwasserstoffreste mit insgesamt 2-20 Kohlenstoffatomen,
**R⁵** und **R⁶** Wasserstoff, einen unsubstituierten oder halogensubstuierten cyclischen, linearen oder verzweigten C₁ bis C₁₈-Alkyl- oder Alkenylrest, einen C₆- bis C₁₈-Arylrest oder einen Rest der Formel
-(CH₂)_{y}-SiR²₃₋ₓ(OR¹)ₓ,
**y** eine ganze Zahl von 1 bis 10,
**x** 2 oder 3,
**n** 1, 2 oder 3 und
**m** eine ganze Zahl von 1 bis 10 bedeuten.

2. Zusammensetzungen (K) nach Anspruch 1, bei denen die silanterminierten Polyurethane (STPU) aus Polyolen (P1), die ausgewählt werden aus Polyetherpolyolen, Polyesterpolyolen oder Mischungen aus verschiedenen Polyether- und/oder Polyesterpolyolen, hergestellt worden sind, wobei die Polyole (P1) bzw. Polyolmischungen (P1) eine mittlere Molmasse Mₙ von höchstens 2000 Dalton aufweisen.

3. Zusammensetzungen (K) nach Anspruch 1 oder 2, bei denen die silanterminierten Polyurethane (STPU) neben den Silantermini der allgemeinen Formel (1) auch Termini der allgemeinen Formel (4)
L³-R⁷ (4),
besitzen, wobei
**R¹** einen unsubstituierten oder halogensubstuierten linearen, verzweigten oder cyclischen Alkyl-, Alkenyl oder Arylalkylrest mit mindestens 7 Kohlenstoffatomen und
**L³** eine zweibindige Bindegruppe ausgewählt aus -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵) bedeuten.

4. Zusammensetzungen (K) nach Anspruch 3, bei denen 2% bis 40%, aller Kettenenden der silanterminierten Polyurethane (STPU) mit Gruppen der allgemeinen Formel (3) terminiert sind.

5. Zusammensetzungen (K) nach Anspruch 1 bis 4, bei denen die silanterminierten Polyether (STPE) lineare Polypropylenglycole mit zwei Endgruppen der allgemeinen Formel (2) gemäß Anspruch 1 sind, welche mittlere Molmassen Mₙ von 8000 bis 20000 Dalton aufweisen.

6. Zusammensetzungen (K) nach Anspruch 1 bis 5, bei denen der Härtungskatalysator (HK) ausgewählt wird aus Titanatestern, Zinnverbindungen, basischen und sauren Verbindungen.

7. Zusammensetzungen (K) nach Anspruch 1 bis 6, bei denen auf 100 Gewichtsteile silanterminierte Polyurethane (STPU) mindestens 0,01 Gewichtsteile Härtungskatalysatoren (HK) eingesetzt werden.

8. Zusammensetzungen (K) nach Anspruch 1 bis 7, welche Alkohol (A) der allgemeinen Formel (9)
R¹¹OH (9)
enthalten, wobei
**R¹¹** einen unsubstituierten oder halogensubstuierten Kohlenwasserstoffrest mit 1-20 Kohlenstoffatomen oder durch nicht benachbarte Sauerstoffatome unterbrochene Kohlenwasserstoffrest mit insgesamt 2-20 Kohlenstoffatomen bedeutet.

9. Verwendung der Zusammensetzungen (K) nach Anspruch 1 bis 8 als Klebstoffe.

## Claims

1. Compositions (K) comprising
A) 100 parts by weight of a silane-terminated polyurethane prepolymer (STPU) comprising in its backbone urethane units and units (E) selected from polyether units and polyester units, the individual polyether units and polyester units (E) having an average molar mass Mₙ of not more than 4000 daltons, and having at least one end group of the general formula (1)
-L¹-(CH₂)_{y}-SiR²₃₋ₓ(OR¹)ₓ (1),
B) 1 to 200 parts by weight of a silane-terminated polyether (STPE) having in its backbone polyether units having an average molar mass Mₙ of 5000 to 30 000 daltons and having end groups of the general formula (2)
-L²-(CH₂)ₘ-SiR⁴₃₋ₙ(OR³)ₙ (2),
C) 0 to 10 parts by weight of a curing catalyst (HK) which accelerates the curing of the compositions (K) in the presence of atmospheric moisture, where
**L¹** is a divalent linking group selected from -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵),
L² is a divalent linking group selected from -O-, -S-, -(R⁶)N-, -O-CO-N(R⁶)-, -N(R⁶)-CO-O-, -N(R⁶)-CO-NH-, -NH-CO-N(R⁶)-, -N(R⁶)-CO-N(R⁶),
**R¹, R², R³ and R⁴** are unsubstituted or halogen-substituted hydrocarbon radicals having 1-6 carbon atoms, or hydrocarbon radicals interrupted by nonadjacent oxygen atoms and having a total of 2-20 carbon atoms,
**R⁵ and R⁶** are hydrogen, an unsubstituted or halogen-substituted cyclic, linear or branched C₁ to C₁₈ alkyl or alkenyl radical, a C₆ to C₁₈ aryl radical or a radical of the formula
-(CH₂)_{y}-SiR²₃₋ₓ(OR¹)x,
**y** is a whole number from 1 to 10,
**x** is 2 or 3,
**n** is 1, 2 or 3, and
**m** is a whole number from 1 to 10.

2. Compositions (K) according to Claim 1, wherein the silane-terminated polyurethanes (STPU) have been prepared from polyols (P1) selected from polyether polyols, polyester polyols or mixtures of different polyether and/or polyester polyols, the polyols (P1) or polyol mixtures (P1) having an average molar mass Mₙ of not more than 2000 daltons.

3. Compositions (K) according to Claim 1 or 2, wherein the silane-terminated polyurethanes (STPU) as well as the silane termini of the general formula (1) also possess termini of the general formula (4)
L³-R⁷ (4),
where
**R⁷** is an unsubstituted or halogen-substituted linear, branched or cyclic alkyl, alkenyl or arylalkyl radical having at least 7 carbon atoms, and
**L³** is a divalent linking group selected from -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵).

4. Compositions (K) according to Claim 3, wherein 2 to 40% of all of the chain ends of the silane-terminated polyurethanes (STPU) are terminated with groups of the general formula (3).

5. Compositions (K) according to Claim 1 to 4, wherein the silane-terminated polyethers (STPE) are linear polypropylene glycols having two end groups of the general formula (2) as in Claim 1, which have average molar masses Mₙ of 8000 to 20 000 daltons.

6. Compositions (K) according to Claim 1 to 5, wherein the curing catalyst (HK) is selected from titanate esters, tin compounds, and basic and acidic compounds.

7. Compositions (K) according to Claim 1 to 6, wherein at least 0.01 part by weight of curing catalysts (HK) is used per 100 parts by weight of silane-terminated polyurethanes (STPU).

8. Compositions (K) according to Claim 1 to 7 comprising alcohol (A) of the general formula (9)
R¹¹OH (9),
where
**R¹¹** is an unsubstituted or halogen-substituted hydrocarbon radical having 1-20 carbon atoms, or a hydrocarbon radical interrupted by nonadjacent oxygen atoms and having a total of 2-20 carbon atoms.

9. Use of the compositions (K) according to Claim 1 to 8 as adhesives.

## Revendications

1. Compositions (K) contenant
A) 100 parties en poids d'un prépolymère de polyuréthane terminé par silane (STPU), qui contient dans son épine dorsale des unités uréthane et des unités (E), qui sont choisies parmi les unités de polyéther et de polyester, les différentes unités de polyéther ou de polyester (E) présentant une masse molaire moyenne Mₙ d'au maximum 4000 daltons, et qui présente au moins un groupe terminal de formule générale (1)
-L¹-(CH₂)_{y}-SiR²₃₋ₓ(OR¹)ₓ (1),
B) 1 à 200 parties en poids d'un polyéther terminé par silane (STPE) qui présente dans son épine dorsale des unités polyéther présentant une masse molaire moyenne Mₙ de 5000 à 30 000 daltons et présentant des groupes terminaux de formule générale (2)
-L²-(CH₂)ₘ-SiR⁴₃₋ₙ(OR³)ₙ (2),
C) 0 à 10 parties en poids d'un catalyseur de durcissement (HK) qui accélère le durcissement des compositions (K) en présence d'humidité de l'air,
L¹ signifiant un groupe de liaison divalent choisi parmi -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵),
L² signifiant un groupe de liaison divalent choisi parmi -O-, -S-, -(R⁶)N-, -O-CO-N(R⁶)-, -N(R⁶)-CO-O-, -N(R⁶)-CO-NH-, -NH-CO-N(R⁶)-, -N(R⁶)-CO-N(R⁶),
R¹, R², R³ et R⁴ signifiant des radicaux hydrocarbonés non substitués ou substitués par halogène, comprenant 1-6 atomes de carbone ou des radicaux hydrocarbonés interrompus par des atomes d'oxygène non adjacents comprenant au total 2-20 atomes de carbone,
R⁵ et R⁶ signifiant hydrogène, un radical C₁-C₁₈-alkyle ou C₁-C₁₈-alcényle non substitué ou substitué par halogène, cyclique, linéaire ou ramifié, un radical C₆-C₁₈-aryle ou un radical de formule
-(CH₂)_{y}-SiR²₃₋ₓ(OR¹)ₓ,
y vaut un nombre entier de 1 à 10,
x vaut 2 ou 3,
n vaut 1, 2, ou 3 et
m vaut un nombre entier de 1 à 10.

2. Compositions (K) selon la revendication 1, dans lesquelles les polyuréthanes terminés par silane (STPU) ont été préparés à partir de polyols (P1), qui sont choisis parmi les polyétherpolyols, les polyesterpolyols ou les mélanges de différents polyétherpolyols et/ou polyesterpolyols, les polyols (P1) ou les mélanges de polyols (P1) présentant une masse molaire moyenne Mₙ d'au plus 2000 daltons.

3. Compositions (K) selon la revendication 1 ou 2, dans lesquelles les polyuréthanes terminés par silane (STPU) présentent, outre les terminaisons silane de formule générale (1), également des terminaisons de formule générale (4)
L³-R⁷ (4),
où
R⁷ signifie un radical alkyle, alcényle ou arylalkyle, non substitué ou substitué par halogène, linéaire, ramifié ou cyclique, comprenant au moins 7 atomes de carbone et
L³ signifie un groupe de liaison divalent choisi parmi -O-, -S-, -(R⁵)N-, -O-CO-N(R⁵)-, -N(R⁵)-CO-O-, -N(R⁵)-CO-NH-, -NH-CO-N(R⁵)-, -N(R⁵)-CO-N(R⁵).

4. Compositions (K) selon la revendication 3, dans lesquelles 2% à 40% de toutes les extrémités de chaîne des polyuréthanes terminés par silane (STPU) sont terminées par des groupes de formule générale (3).

5. Compositions (K) selon la revendication 1 à 4, dans lesquelles les polyéthers terminés par silane (STPE) sont des polypropylèneglycols linéaires présentant deux groupes terminaux de formule générale (2) selon la revendication 1, qui présentent des masses molaires moyennes Mₙ de 8000 à 20 000 daltons.

6. Compositions (K) selon la revendication 1 à 5, dans lesquelles le catalyseur de durcissement (HK) est choisi parmi les esters de titanate, les composés de l'étain, les composés basiques et acides.

7. Compositions (K) selon la revendication 1 à 6, dans lesquelles on utilise, pour 100 parties en poids de polyuréthanes terminés par silane (STPU), au moins 0,01 partie en poids de catalyseurs de durcissement (HK).

8. Compositions (K) selon la revendication 1 à 7, qui contiennent un alcool (A) de formule générale (9)
R¹¹OH (9)
où
R¹¹ signifie un radical hydrocarboné non substitué ou substitué par halogène, comprenant 1-20 atomes de carbone ou un radical hydrocarboné interrompu par des atomes d'oxygène non adjacents comprenant au total 2-20 atomes de carbone.

9. Utilisation des compositions (K) selon la revendication 1 à 8 comme adhésifs.
